# EUROPÄISCHE PATENTSCHRIFT

(11) **EP 0 678 693 B1**
(45) Veröffentlichungstag und Bekanntmachung des Hinweises auf die Patenterteilung: **25.02.1998**
(21) Anmeldenummer: 95810256.8
(22) Anmeldetag: 19.04.1995
(51) Int. Cl.: F16K 17/00, A62B 13/00

(54) **Schutzvorrichtung gegen Druckluftstösse**
Blast protection device
Dispositif de protection contre les ondes de choc

(30) Priorität: 21.04.1994 CH 1232/94
(43) Veröffentlichungstag der Anmeldung: 25.10.1995
(73) Patentinhaber: Andair AG, CH-8450 Andelfingen (CH)
(72) Erfinder: Riedo, Hans, CH-8462 Rheinau (CH)
(74) Vertreter: Patentanwälte Breiter + Wiedmer AG

(56) Entgegenhaltungen:
- BE-A- 640 597
- BE-A- 658 621
- CH-A- 427 514
- CH-A- 455 527
- CH-A- 465 415
- DE-A- 1 293 605
- DE-A- 1 708 844
- NL-A- 6 511 169
- US-A- 3 075 448
- US-A- 3 140 648

## Beschreibung

Die Erfindung bezieht sich auf eine Schutzvorrichtung nach dem Oberbegriff von Patentanspruch 1. Weiter betrifft die Erfindung die Verwendung der Schutzvorrichtung.

Schutzräume für Personen und/oder Anlagen, Containments für Kernkraftwerke und andere Offshore-Anlagen müssen einerseits belüftet werden, andererseits aber Druckluftstössen widerstehen. Je nach der Stärke der allenfalls zu erwartenden Luftdruckwellen und der Verwendung des geschlossenen Raumes werden angemessene Schutzvorrichtungen eingebaut.

Für den druckfesten Abschluss von Zuluft- und Abluftöffnungen in Schutzräumen oder in anderen exponierten Objekten werden Explosions-Schutzventile eingesetzt. Diese bieten Personen und Anlagen wirksamen Schutz gegen die Einwirkungen nuklearer und konventioneller Explosionen, eingeschlossen den an jede Explosion anschliessenden Sog, indem beidseits des Ventilverschlusskörpers ein Ventilsitz ausgebildet ist.

Im Ventilgehäuse ist der Ventilverschlusskörper, in an sich bekannter Weise meist als Ventilteller, Ventilkugel oder Ventilplatte ausgebildet, zweckmässig an radialen oder tangentialen (vgl. beispielsweise CH-PS 482964) mit einem grossen, ringförmig ausgebildeten freien Querschnitt zum Ventilgehäuse aufgehängt. Beim Auftreten einer starken Druckwelle wird der Ventilverschlusskörper vom Luftstoss gegen die raumseitige Dichtungsfläche geschleudert und in diesen Ventilsitz gepresst, wodurch nach dem Schliessen des Ventils ein Luftdurchtritt verhindert wird. Bei einem kräftigen nachfolgenden Sog schliesst der Ventilverschlusskörper analog in der entgegengesetzten Richtung. Nach dem Abklingen der kurzen Ueber- bzw. Unterdruckphase erfolgt dank der Federn eine automatische Rückstellung des Ventilverschlusskörpers auf den normalen Lüftungsbetrieb. Das Explosions-Schutzventil arbeitet passiv, der Ventilverschlusskörper kann nicht durch eine Steuerung und/oder Betätigungsorgane in Schliessstellung gebracht werden.

Obwohl bei einem hohen Explosionsdruck der Ventilverschlusskörper geschossartig in den Ventilsitz gepresst wird, kann während einer Zeitspanne in der Grössenordnung einer Millisekunde Luft durchtreten, was als Restluftstoss bezeichnet wird.

Bekannte Explosions-Schutzventile werden sowohl als Abluftals auch als Zuluftventil eingesetzt. Abluftventile von Schutzraum-Belüftungsanlagen, Dieselkühlanlagen oder Kälteanlagen haben einen Schutzgrad von beispielsweise 3 bar. In diesem Fall können die Abluftventile gleichtzeitig als Ueberdruckventil eingesetzt werden, falls sie raumseitig eine entsprechende Klappe oder dgl. haben. Als Zuluftventile von Schutzraum-Belüftungsanlagen, Dieselkühlanlagen und Kälteanlagen mit gleichem Schutzgrad eingesetzte Explosions-Schutzventile haben in Schutzräumen zweckmässig einen nachgeordneten Vorfilter zur Staubabscheidung.

Bei einer nuklearen Explosion kann die Luftstossbelastung mit einer starken Ueberdruckphase verhältnissmässig lange andauern, beispielsweise während 10 bis 500 ms. Die Schliessphase des Explosions-Schutzventils beträgt höchstens einige Millisekunden, typisch sind 1 bis 3 ms. Im Gegensatz dazu ist bei einer konventionellen Explosion die Phase mit hohem Ueberdruck sehr kurz, beispielsweise 1 bis 10 ms. Eine konventionelle Luftstossbelastung kann sich also bereits während der Schliessphase des Ventilverschlusskörpers stark abbauen. Die Ueberdruckdauer eines konventionellen Luftstosses kann sogar im Bereich der Schliesszeit des Explosions-Schutzventils liegen, weshalb die auf das Ventil während des Schliessvorganges wirkende, gemittelte Druckbelastung erheblich kleiner ausfällt als im nuklearen Fall. Aufgrund von nuklearen Belastungsdaten entwickelte Explosions-Schutzventile können im konventionellen Bereich durchaus auch für wesentlich höhere Druckbelastungen eingesetzt werden.

Zudem werden die für den nuklearen Belastungsfall geltenden Anforderungen bezüglich einer Leckage angesichts der sehr kurzen Ueberdruckdauer bei konventionellen Luftstössen bedeutungslos. Dem Explosions-Schutzventil nachgeordnete Elemente und Einbauteile, beispielsweise Gasfilter, werden im konventionellen Belastungsfall einzig durch einen vorstehend definierten Restluftstoss belastet, jedoch bei entsprechend starken Explosionsdruckwellen zerstört.

Zur Reduktion eines in Explosions-Schutzventilen als Restluftstoss durchgehenden Impulses und Spitzenüberdruckes sind in bezug auf die Explosionsdruckrichtung vorgeordnete Druckminderer bekannt, beispielsweise in Form von Prallplatten und/oder anderen Umlenkorganen. Diese müssen eine ausserordentlich hohe mechanische Festigkeit aufweisen, sonst werden sie schon von der ersten Front einer Explosionsdruckwelle zerstört und ausser Funktion gesetzt.

Die EP,A1 0489183 beschreibt eine Explosionsschutzeinheit mit einem Explosions-Schutzventil und einem vorgeordneten passiven Schutzorgan, welches zwischen zwei parallel verlaufenden metallischen Elementen eine schlitzförmige, in eine Verbindungskammer mündende Eintrittsöffnung umfasst. Die Elemente sind in Strömungsrichtung angestellte, abgewinkelte Leitflächen. In Richtung der Eintrittsöffnung schliessen offene, längliche Reflektionskammern an die Verbindungskammern an, welche ihrerseits über eine seitliche Durchtrittsöffnung mit einem Expansionsraum verbunden sind. Dieser weist eine zum Explosions-Schutzventil führende Austrittsöffnung auf. Die Explosionsschutzeinheit nach der EP,A1 0489183 mit vorgeordnetem passivem Schutzorgan ist wegen der erforderlichen hohen mechanischen Festigkeit teuer und sperrig.

Die DE,A1 3627490 hat ein Explosions-Schutzventil für Schutzraumbelüftungsleitungen zum Gegenstand, welches eine Kombination aus einer Druckstossicherung mit Wegumlenkung und -verlängerung einerseits und einen Staubfilter andererseits umfasst. Die Wegumlenkung und -verlängerung dient der Heraufsetzung der Laufzeit der einfallenden Stossfront zum Ventilverschlusskörper. Diese Luftführung ist als Multizyklon mit einer Vielzahl zueinander paralleler Zyklone ausgebildet, diese Nebenfunktion interessiert jedoch im Rahmen der vorliegenden Erfindung nicht weiter. Auch das Explosions-Schutzventil nach der DE,A1 3627490, bei welchem der Ventilverschlusskörper vom Hauptstoss der Druckwelle geschlossen wird, ist in bezug auf die Verminderung des Restluftstosses teuer und aufwendig.

Die CH,A5 427514, mit den Merkmalen des Oberbegriffs des Anspruchs 1, beschreibt eine Schnellschlussvorrichtung an Luftdurchlassöffnungen für Schutzräume. Deren Explosions-Schutzventil umfasst eine Schliessplatte bzw. einen Ventilverschlusskörper mit Längsschlitzen, welche beim Schliessen des Ventils auf einen ebenfalls mit Schlitzen versehenen Sitzteil aufprallt. Die dabei momentan verformten Stege der Schliessplatte verschliessen die Schlitze des Sitzteils.

In der BE,A 640597 wird ein selbsttätiges Absperrventil für die Luftzu- und -abführleitungen von Schutzräumen beschrieben. Das Ventil hat ein in Richtung zum Verschlusskörper gerichtetes Luftleitungsrohr, das von zwei coaxialen Kanälen zum Umleiten der eintretenden Luft umgeben ist. Der Verschlusskörper liegt dem inneren Ende des Luftleitungsrohrs unmittelbar gegenüber und ist topfartig ausgebildet. Nach einer speziellen Ausführungsform ist ein Druckabsorber vorgeordnet, welcher in einer Erweiterung korbförmig ausgebildet ist. Im Explosionsfall dämpft dieser Druckabsorber, welcher ein die Eintrittsöffnung abdeckendes flaches Schutzsieb und einen innenliegenden siebartigen Körper umfasst, den Druckstoss teilweise. Die übrige Druckwelle betätigt das Absperrventil.

Der Erfinder hat sich die Aufgabe gestellt, eine Variante einer einfachen, aber bedarfsabhängig wirkungsvollen Schutzvorrichtung der eingangs genannten Art zu schaffen, welche bei Explosionen oder dgl. den Luftstoss von Druckwellen reduziert.

Die Aufgabe wird erfindungsgemäss nach dem Kennzeichen gemäss Patentanspruch 1 gelöst. Spezielle und weiterbildende Ausführungsformen des erfindungsgemässen Explosions-Schutzventil sind Gegenstand von abhängigen Patentansprüchen.

Die der Belüftungsöffnung oder dem Ventilverschlusskörper nachgeordneten korbförmigen Schikanen zum Abbau des Luftstosses, insbesondere des Restluftstosses, sind vorzugsweise angeflanscht. Es sind auch alle anderen bekannten lösbaren und unlösbaren Befestigungsarten anwendbar. Die mechanische Festigkeit der korbförmigen Schikanen muss derjenigen der übrigen Teile eines allfälligen Explosions-Schutzventils entsprechen.

Die Luftmoleküle werden in den korbförmigen Schikanen reflektiert oder umgelenkt, was den Energieinhalt der durchtretenden Luftmenge vermindert, insbesondere wird der Restluftstoss während der kurzen Schliesszeit eines Ventilverschlusskörpers abgebaut.

Als spezielle Ausführungsformen von korbförmigen Schikanen werden beispielsweise Lochblech-, Schlitzblech- oder engmaschige Drahtgeflechtkörbe eingesetzt, welche ein- oder mehrlagig ausgebildet sein können. Der freie Querschnitt liegt vorzugsweise bei höchstens etwa 50%. Die geometrische Form der Körbe ist beispielsweise zylindrisch, kegelstumpfförmig, kugelförmig oder halbkugelförmig. Unabhängig von geometrischer Form und der Gestaltung der Durchtrittsöffnungen muss die Schikane eine wesentlich höhere mechanische Festigkeit aufweisen als beispielsweise ein konventioneller Vorfilter. Andererseits kann die mechanische Festigkeit von einem Ventilverschlusskörper nachgeordneten Schikanen weit unter derjenigen von vorgeordneten Schutzorganen liegen, welche der vollen Zerstörungskraft von ungebremsten Explosionsdruckwellen ausgesetzt sind.

Die nachgeordneten Schikanen können bezüglich ihrer Grösse, Form, Grösse und Form der Löcher, Abstand der Löcher usw. durch Versuche optimiert werden.

Bei starken Druckluftstössen kann ein zusätzlich zu den erfindungsgemässen, mechanisch festen korbförmigen Schikanen zum Abbau des Restluftstosses eingebautes Explosions-Schutzventil eine allfällige Beschädigung verhindern.

Zusätzlich zu einer nachgeordneten Schikane kann zusätzlich ein einfaches, dem Ventilverschlusskörper vorgeordnetes Schutzorgan montiert werden, beispielsweise in Form einer Prallplatte mit seitlichen Eintrittsöffnungen für einen Explosions-Druckluftstoss.

Nach einer Variante der Erfindung mit einem Explosions-Schutzventil kann ein kleiner Teil der Explosionsdruckwellen Mittel betätigen, welche unmittelbar auf den Ventilverschlusskörper einwirken und diesen in den entsprechenden Ventilsitz drücken. Der Hauptstoss der Explosionsdruckwellen kommt so erst an, wenn der Ventilverschlusskörper schon teilweise, nahezu oder bereits vollständig geschlossen ist. Dies bedeutet eine beträchtliche Reduktion des Restluftstosses. Durch Kombination mit vorstehend erwähnten Massnahmen kann dieser Restluftstoss weiter vermindert werden.

Für die Betätigung der direkt auf den Ventilverschlusskörper einwirkenden Mittel werden vorzugsweise etwa 1 bis 10%, insbesondere etwa 2 bis 6%, der auf den Einlassstutzen einwirkenden Explosionsdruckwellen abgezweigt.

Mit dem erfindungsgemäss ausgerüsteten Explosions-Schutzventil kann der Restluftstoss, insbesondere von konventionellen Explosionen reduziert werden. Dadurch wird sowohl der vor dem vollständigen Schliessen durchgehende Impuls als auch der durchgehende Spitzenüberdruck derart entschärft, dass eine schädigende Einwirkung auf Mensch, Tier und/oder Einrichtungen entfällt. Durch an sich bekannte technische Massnahmen kann ein erfindungsgemässes Explosions-Schutzventil mit einer Ueberdruckklappe oder mit einem nachgeordneten Vorfilter ausgerüstet sein, je nach dem spezifischen Einsatzzweck.

Die vorzugsweise eingesetzten Explosions-Schutzventile sind verschleissfrei und praktisch wartungsfrei. Sie können mit einem wirksamen Korrosionsschutz geliefert werden. Der ganze Schliessmechanismus besteht aus an sich bekannten Materialien hoher Schlagfestigkeit, beispielsweise aus einem rostfreien Stahl, wie Chrom-Nickel- oder Chrom-Molybdän-Nickelstahl. Von besonderer Bedeutung sind Materialien geringer Dichte, welche eine kürzere Schliesszeit und eine kleinere Aufprallenergie des Ventilverschlusskörpers auf dem Ventilsitz erlauben. Wenigstens teilweise aus Titan, einer Titanlegierung oder aus einem Compositwerkstoff, beispielsweise mit Aramidfasern (KEVLAR), bestehende Verschlusskörper haben sehr gute Ergebnisse gebracht.

Materialmässige Masseneinsparungen bezüglich des Schliessmechanismus, insbesondere von dessen mobilen Teilen, können mit konstruktiven Massnahmen zur Gewichtsverminderung kombiniert sein, beispielsweise durch Anbringen von Hohlräumen und Aussparungen.

Nach einer Explosion weisen die Explosions-Schutzventile keinen höheren Druckverlust als vor der Explosion auf.

Die Erfindung wird anhand von in der Zeichnung dargestellten Ausführungsbeispielen, welche auch Gegenstand von abhängigen Ansprüchen sind, näher erläutert. Die Axialschnitte zeigen schematisch:
- Fig. 1 ein montiertes Explosionsschutzventil an sich bekannter Bauart,
- Fig. 2 das Explosionsventil gemäss Fig. 1 mit angeflanschtem Stosswellen- und Messrohr ebenfalls an sich bekannter Bauart,
- Fig. 3 ein Explosions-Schutzventil mit Lochblechmantel,
- Fig. 4 eine Variante gemäss Fig. 3 mit einem Lochblechkorb,
- Fig. 5 eine Variante gemäss Fig. 3 ergänzt durch eine Prallplatte,
- Fig. 6 eine Kombination von Fig. 4 und 5,
- Fig. 7 eine Variante gemäss Fig. 3 mit kleinerem Lochblechmantel,
- Fig. 8 eine Variante gemäss Fig. 4 mit kleinerem Lochblechkorb,
- Fig. 9 eine Variante gemäss Fig. 8 mit Prallplatte,
- Fig. 10 ein Explosions-Schutzventil mit Vorauslösung des Ventilverschlusskörpers durch einen Stössel,
- Fig. 11 ein Explosions-Schutzventil gemäss Fig. 8 mit nachgeordnetem Vorfilter,
- Fig. 12 eine Variante von Fig. 11 mit Prallplatte,
- Fig. 13 ein Explosions-Schutzventil mit pneumatischer Vorauslösung des Ventilverschlusskörpers, und
- Fig. 14 einen Mauerdurchbruch zur Belüftung mit einer innenliegenden Schikane.

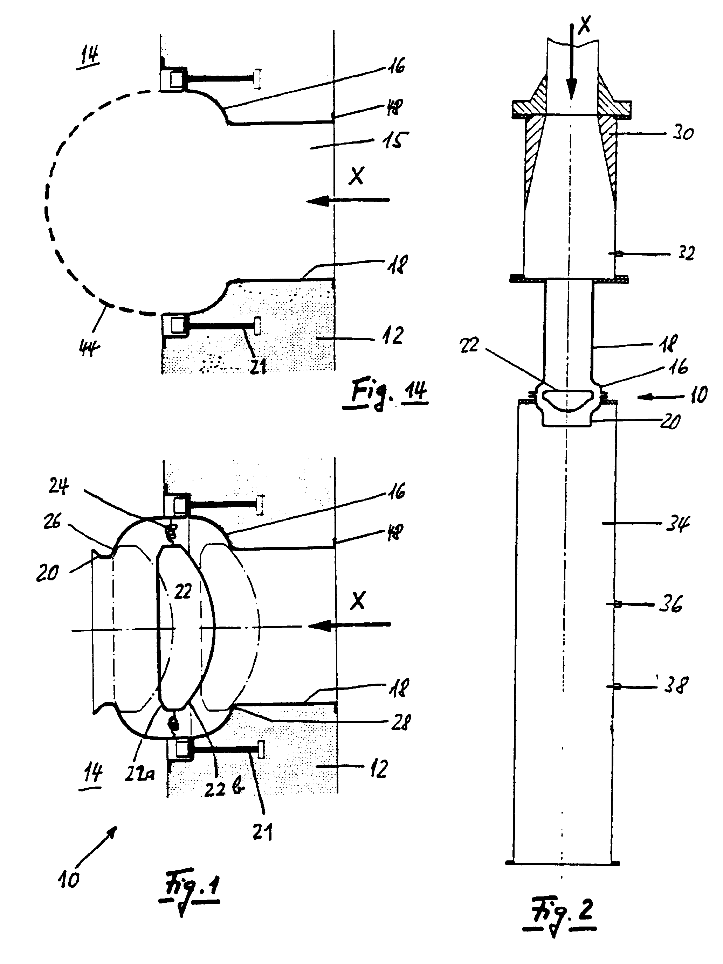

In Fig. 1 ist ein an sich bekanntes Explosions-Schutzventil 10 dargestellt, welches in eine Mauer 12 eines geschlossenen Raumes 14 eingebaut ist. Das Explosions-Schutzventil 10 umfasst ein Ventilgehäuse 16 mit einem die Mauer 12 durchgreifenden Einlassstutzen 18 und einem schutzraumseitig angeordneten kurzen Auslassstutzen 20.

Das zweiteilig ausgebildete Ventilgehäuse 16 ist mit Verankerungen 21 in der Mauer 12 fixiert.

Im Ventilgehäuse 16 ist ein aerodynamisch geformter Ventilverschlusskörper 22 an mehreren, in radialer Richtung verlaufenden Federn 24 schwimmend aufgehängt. Der im vorliegenden Fall als Tellerventil ausgebildete Ventilverschlusskörper 22 besteht aus einem massiven, etwa 2 mm dicken Chrom-Nickelstahlblech. Zwischen dem Ventilverschlusskörper 22 und dem Ventilgehäuse 16 besteht ein grosser, freier Ringraum. In dieser normalen Belüftungsstellung ist das Explosions-Schutzventil 10 weder gegen Verschmutzung (Staub, Sand) noch Vereisung anfällig.

Beim Auftreten von Explosionsdruckwellen wird der Ventilverschlusskörper 22 in Richtung X, der Explosionsdruckrichtung, zum Auslassstutzen 20 geschleudert und mit einer peripheren, ringförmigen Dichtfläche 22a dichtend auf einen ersten Ventilsitz 26 gedrückt. Während 1 bis 5 ms, der Schliesszeit des Ventilverschlusskörpers 22, kann Druckluft in den Schutzraum 14 eindringen, nachher verschliesst das Explosions-Schutzventil 10 dicht. Beim sofort anschliessenden Sog fliegt der Ventilverschlusskörper 22 entgegen der Richtung X auf einen zweiten Ventilsitz 28 und wird mit einer peripheren, ringförmigen Dichtfläche 22b darauf gedrückt, bis das Vakuum aufgefüllt und der Ventilverschlusskörper 22 durch die Federn 24 in die mit ausgezogenem Strich dargestellte Ruhelage zurückgeführt ist. Die beiden Schliesslagen des Ventilverschlusskörpers 22 sind strichpunktiert angedeutet.

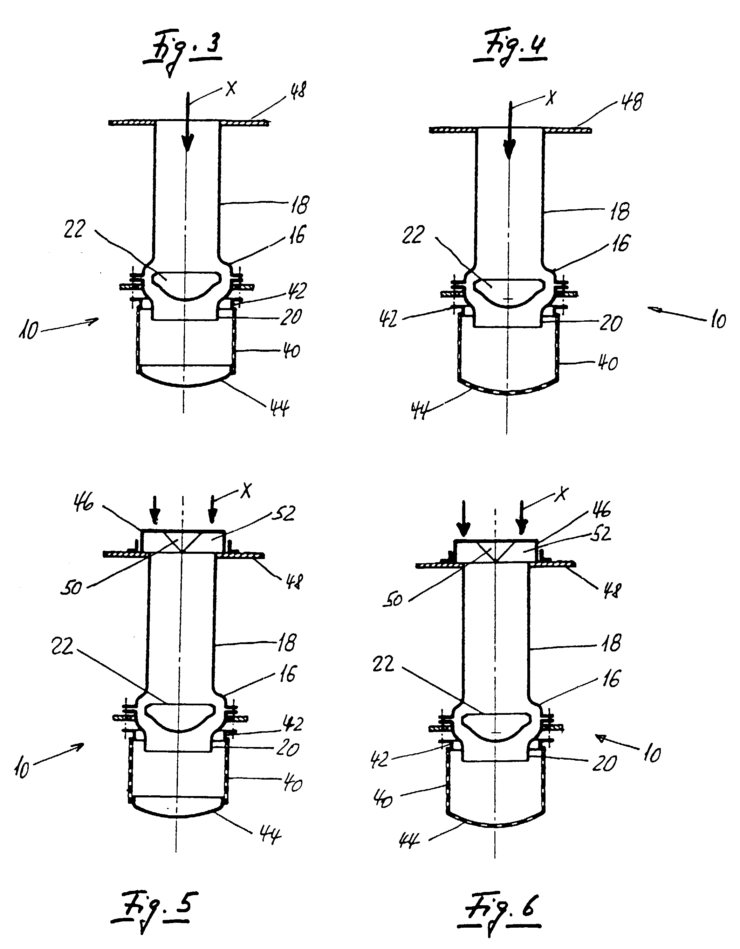

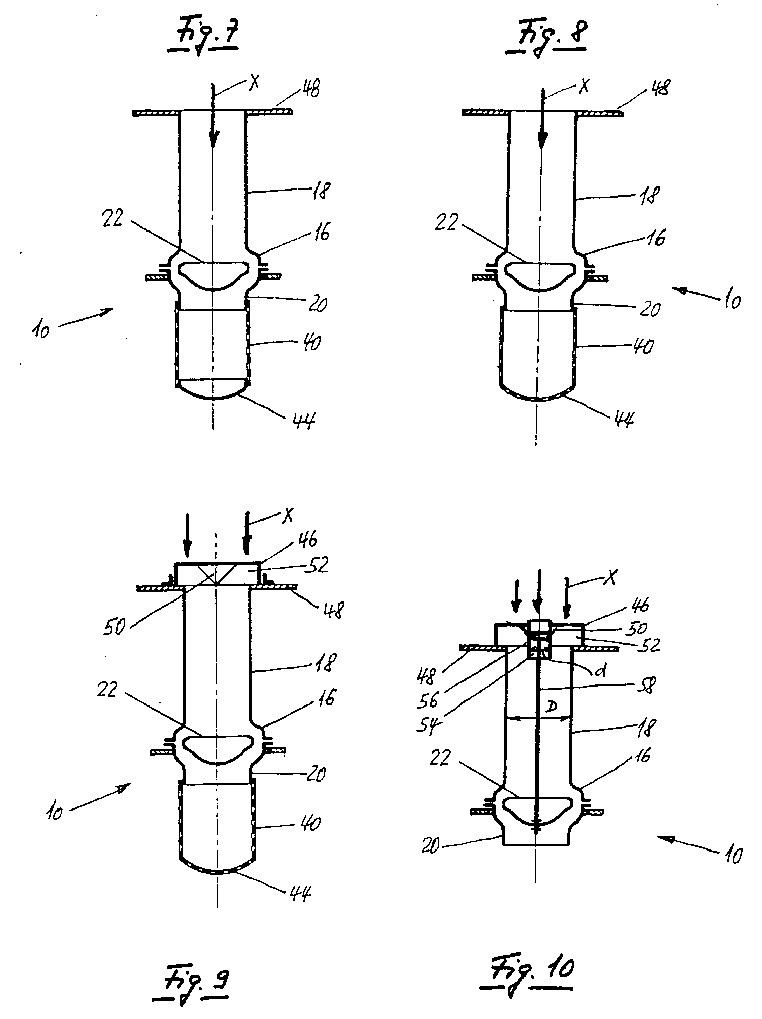

In Fig. 2 ist eine Versuchsanordnung für Druckstossversuche mit Explosions-Schutzventilen 10 dargestellt. Einlasseitig ist ein Stosswellenrohr 30 mit einem Messensor 32, auslasseitig ein Messrohr 34 mit einem zweiten Messensor 36 und einem dritten Messensor 38 angeordnet. Mit einer Versuchsanordnung gemäss Fig. 2 sind die charakteristischen Daten für die in Fig. 3 bis 13 dargestellten Explosions-Schutzventile 10 ausgemessen und ausgewertet worden. Alle in diesen Figuren dargestellten Explosions-Schutzventile 10 sind Varianten der Erfindung.

Nach der Ausführungsform von Fig. 3 weist das Explosions-Schutzventil 10 auslasseitig einen Lochblechmantel 40 auf, welcher an einem abgewinkelten Ringprofil 42 aufgehängt und mit einer gasdichten Kappe 44 verschlossen ist. Lochblechmantel 40 und Kappe 44 bilden eine nachgeordnete Schikane, welche im Explosionsfall erfindungsgemäss den Restluftstoss vermindert. Die harten Spitzen des Restimpulses der Druckwelle werden "verschmiert".

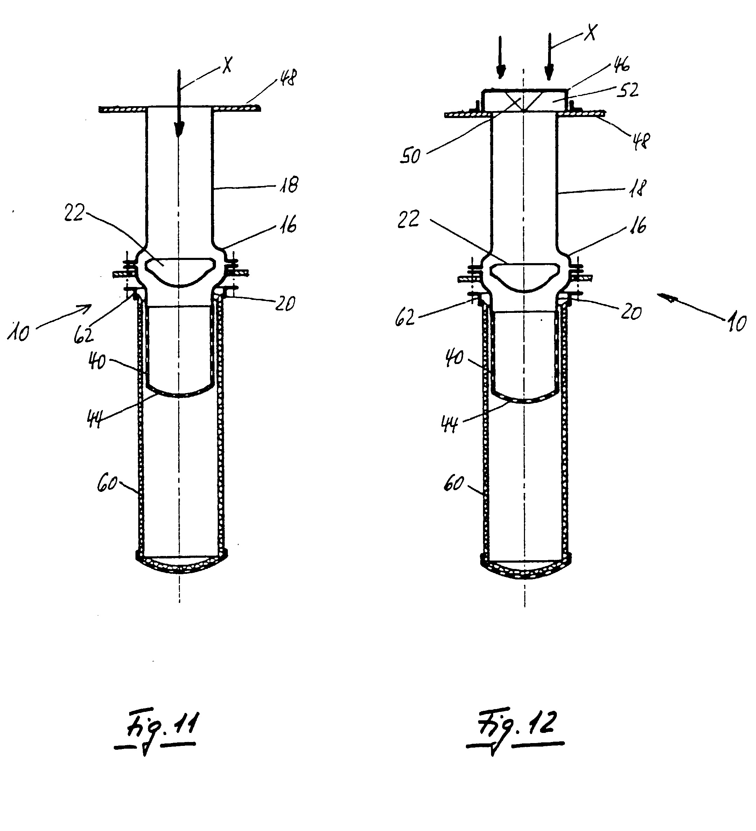

In der Variante nach Fig. 4 ist die Verschlusskappe 44 ebenfalls als Lochblech gestaltet, die aus dem Lochblechmantel 40 und der Lochblechkappe 44 bestehende nachgeordnete Schikane wird auch als Lochblechkorb bezeichnet.

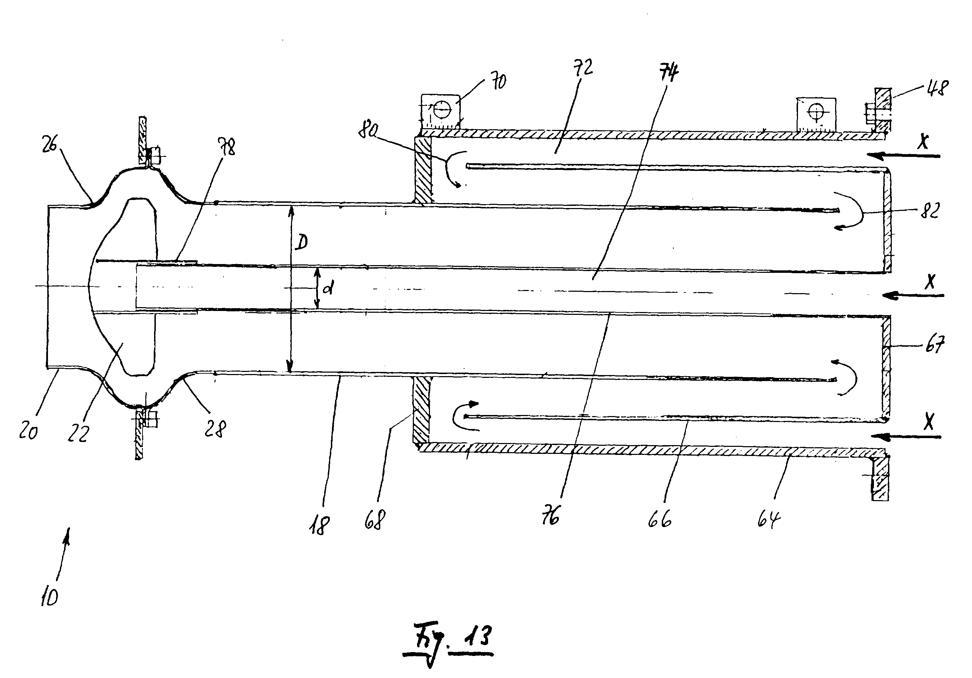

Die in bezug auf die Explosionsdruckrichtung X dem Ventilverschlusskörper 22 nachgeordneten Schikanen gemäss Fig. 5 und 6 entsprechen Fig. 3 und 4. Einlasseitig ist auf dem Flansch 48 des Einlassstutzens 18 eine massive Prallplatte 46 als vorgeordnete Schikane montiert, welche auf vier dreieckförmigen Füssen 50 abstützt und grosse seitliche Eintrittsöffnungen 52 freilässt. Die Prallplatte 46 nimmt der Explosionsfront die erste Wucht und vermag so mit den nachgeordneten Schikanen den Restluftstoss wirkungsvoll zu vermindern.

Fig. 7 unterscheidet sich lediglich dadurch von Fig. 3, dass das Lochblech 40 unmittelbar über den Auslassstutzen 20 gestülpt ist. Die aus dem Lochblech 40 und der Verschlusskappe 44 gebildete nachgeordnete Schikane hat einen kleineren Durchmesser und dadurch ein kleineres Volumen als in Fig. 3. Fig. 8 unterscheidet sich in gleicher Weise von Fig. 4, Fig. 9 von Fig. 6.

In der Ausführungsform nach Fig. 10 hat die Prallplatte 46 eine mit dem Explosions-Schutzventil 10 coaxiale Hülse 54, welche in den Einlassstutzen 18 hineinragt. In dieser Hülse 54 ist ein an der Innenwand anliegender Kolben 56 geführt, welcher über einen Stössel 58 mit dem Ventilverschlusskörper 22 verbunden ist. Die Länge der Hülse 54 ist so bemessen, dass der Kolben 56 bei der grösstmöglichen Auslenkung des Ventilverschlusskörpers 22 in axialer Richtung in der Hülse bleibt. Der Stössel 58 ist im Ventilverschlusskörper 22 gut verankert. Der Stössel selbst ist rohrförmig ausgebildet und besteht, wie der ganze Schliessmechanismus, aus Chrom-Nickelstahl.

Breitet sich eine Explosionsdruckwelle in Richtung X aus, wird ein den geometrischen Gegebenheiten entsprechender Teil in die Hülse 54 geleitet. Der Kolben 56 wird schlagartig nach unten gedrückt und damit der Ventilverschlusskörper 22 in Schliesslage gebracht. Der übrige Explosionsdruck tritt über die seitlichen Eintrittsöffnungen 52 der Prallplatte 46 in den Einlassstutzen 18 ein, breitet sich nach unten aus und trifft auf den bereits schliessenden Ventilverschlusskörper 22. Durch die frühe Schliessbewegung wird der Restluftstoss bedeutend verkleinert. Auch nach der Ausführungsform gemäss Fig. 10 ist, nicht dargestellt, eine der in den übrigen Figuren gezeigten korbförmigen Schikanen eingesetzt, wodurch der Restluftstoss nochmals verkleinert wird.

Fig. 11 zeigt ein Explosionsschutzventil gemäss Fig. 7 mit einem nachgeordneten Vorfilter 60 an sich bekannter Bauart. Ohne die nachgeordnete, aus Lochblechmantel 40 und Lochblechkappe 44 bestehende Schikane würde der Vorfilter 60 bei einem grösseren Restluftstoss zerstört.

In der Ausführungsform nach Fig. 12 ist zusätzlich eine Prallplatte 46 angeordnet, was einen weiter verbesserten Schutz des nachgeordneten Vorfilters 60 bringt. Dieses Explosions-Schutzventil 10 entspricht Fig. 9. Auch bei den Explosions-Schutzventilen 10 gemäss Fig. 8 und 10 kann ein nachgeordneter Vorfilter 60 montiert werden, wenn das Ventilgehäuse 16 auslasseitig ein abgewinkeltes Ringprofil 62 aufweist.

Das Explosions-Schutzventil gemäss Fig. 13 ist einlasseitig speziell ausgestaltet. Der Einlassstutzen 18 hat einen endständigen Aufsatz mit einem Aussenrohr 64 und einem Innenrohr 66. Das Aussenrohr 64 ist massiv ausgebildet und über eine Lochscheibe 68 mit dem Einlassstutzen verbunden. Die Lochscheibe 68 ist, wie die Platte 67, welche die Einlassöffnung teilweise abdeckt, massiv ausgebildet. Am Aussenrohr 64 sind zwei gelochte Befestigungslaschen 70 erkennbar, welche der Fixierung des Explosions-Schutzventils 10 dienen.

Die Eintrittsöffnung des Einlassstutzens 18 liegt nur teilweise für den allfälligen Eintritt von Explosionsdruckwellen in Richtung X frei:
- im peripheren Bereich ein Ringspalt 72, und
- im zentralen Bereich ein Innenraum 74 eines mit dem Einlassstutzen coaxial angeordenten Steuerrohres 76, welches sich von der Eintrittsöffnung in den Ventilverschlusskörper 22 erstreckt.

Im Ventilverschlusskörper 22 ist ein offenes Rohrstück eingesetzt, welches über das Steuerrohr 76 gestülpt ist. So kann der Ventilverschlusskörper 22 von einem Ventilsitz 26 zum anderen Ventilsitz 28 entlang des Steuerrohres 76 verschoben werden. Der Ventilverschlusskörper 22 ist überdies, wie in allen anderen Varianten, mit Rückführmitteln vom einen oder anderen Ventilsitz 26,28 ausgerüstet, damit nach einer Explosion oder einem Sog sofort wieder die Ruhestellung eingenommen wird. Diese Mittel können, wie vorstehend erklärt, radiale oder tangentiale Federn sein.

Die Eintrittsfläche des Steuerrohres 76 beträgt etwa 10% der Eintrittsfläche des Ringspaltes 72. Bei einer Explosion wird ein entsprechender Teil der Explosionsdruckwellen im Innenraum 74 des Steuerrohres 76 auf direktem, geradem Weg zum Ventilverschlusskörper 22 geführt. Dieser verschiebt sich geschossartig in Richtung des ersten Ventilsitzes 26 und verschliesst den Auslassstutzen 20. Ein weitaus grösserer Teil der Explosionsdruckwellen, welche in den Ringspalt 72 eintreten, werden an der Lochscheibe 68 in Richtung des Pfeils 80 umgelenkt, in Richtung der Eintrittsöffnung des Einlassstutzens 18 zurückgeworfen, dort in Richtung des Pfeils 82 nochmals umgelenkt und zum Ventilverschlusskörper 22 geleitet, welcher sich bereits in Richtung des Ventilsitzes 26 bewegt oder diesen sogar schon erreicht hat. Die doppelte Umlenkung des Druckluftstosses bewirkt eine Abschwächung und eine zeitliche Verzögerung. Dadurch wird der Restluftstoss stark vermindert. Eine weitere Reduktion wird durch die nicht dargestellte, am Auslassstutzen 20 eingesetzte, in den vorstehenden Figuren 3-9, 11 und 12 gezeigte korbförmige Schikane erreicht.

Das Aussenrohr 64 ist in der Mauer 12 (Fig. 1) einbetoniert, kann aber - mit entsprechend verstärkenden konstruktiven Massnahmen - auch vorgebaut sein.

Fig. 14 zeigt eine einfache Schutzvorrichtung mit einer korbförmigen, gelochten Schikane 44 zur Reduktion des Luftstosses von Druckwellen in Richtung X. Der Freiflächenfaktor liegt bei etwa 30%.

Die im Katastrophenfall zu erwartenden Druckwellen sind verhältnismässig gering und ohne Schadstoffe, weshalb kein Explosions-Schutzventil eingebaut ist.

Ein Mauerdurchbruch 15 zur Belüftung ist mit einem Mantel 16 ausgekleidet, welcher mit einem Befestigungsflansch der innenliegenden Schikane 44 verschraubt und mit einer Verankerung 21 in der Mauer 12 fixiert ist. Beim Einbau eines Explosions-Schutzventils wäre der Mantel das Ventilgehäuse.

Die in den vorhergehenden Figuren gezeigten Varianten mit einem Explosionsschutzventil 10 haben korbförmige Schikanen 40,44, welche auch nach der Ausführungsform gemäss Fig. 14 direkt an den Mantel 16 des Mauerdurchbruchs 15 angeflanscht werden können, mit oder ohne übergestülpten Vorfilter 60 (Fig. 11,12).

Schliesslich kann auch gemäss Fig. 14 eine aussenseitige Prallplatte 46 (Fig. 5,6) mit Einlassöffnungen 52 montiert sein, welche die Kraft der Druckwellen bricht.

## Patentansprüche

1. Schutzvorrichtung mit mechanisch fest verankerten Mitteln zur Reduktion des Luftstosses von Druckwellen in Belüftungseinrichtungen von geschlossenen Räumen (14),
dadurch gekennzeichnet, dass
die in bezug auf die Druckrichtung (X) der Belüftungseinrichtung nachgeordneten, in einen geschlossenen Raum (14) hineinragenden Mittel als luftdurchlässige, korbförmige Schikanen (40,44) ausgebildet sind.

2. Schutzvorrichtung nach Anspruch 1, dadurch gekennzeichnet, dass die vorzugsweise angeflanschten korbförmigen nachgeordneten Schikanen (40,44) einen freien Querschnitt bis höchstens etwa 50% haben.

3. Schutzvorrichtung nach Anspruh 1 oder 2, dadurch gekennzeichnet, dass die korbförmigen Schikanen (40,44) aus wenigstens einlagigen Lochblechen, Schlitzblechen oder feinmaschigen Drahtgeflechten bestehen, welche vorzugsweise in Form eines Zylinders, eines Kegelstumpfs, einer Kugel oder einer Halbkugel ausgebildet sind.

4. Schutzvorrichtung nach Anspruch 3, dadurch gekennzeichnet, dass der der Austrittsöffnung gegenüberliegende Teil der korbförmigen Schikanen (44) luftundurchlässig ausgebildet ist.

5. Schutzvorrichtung nach einem der Ansprüche 1 bis 4, dadurch gekennzeichnet, dass über den korbförmigen Schikanen (40,44) zum Abbau des Druckluftstosses ein Vorfilter (60) angeordnet ist.

6. Schutzvorrichtung nach einem der Ansprüche 1 bis 5, dadurch gekennzeichnet, dass eine die Eintrittsöffnung der Belüftungseinrichtung überdeckende Prallplatte (46) vier seitliche Einlassöffnungen (52) aufweist.

7. Schutzvorrichtung nach einem der Ansprüche 1 bis 6 zur Reduktion des Restluftstosses von Druckwellen mit einem Explosions-Schutzventil (10), dadurch gekennzeichnet, dass dieses zusätzlich zu den mechanisch festen korbförmigen Mitteln (40,44) zum Abbau des Restluftstosses in bezug auf die Explosionsrichtung (X) vorgeordnet ein Ventilgehäuse (16) mit einem Einlass- (18) und einem Auslassstutzen (20), einen formfesten, mobilen Ventilverschlusskörper (22) mit peripheren, ringförmigen Dichtflächen (22a,22b), Befestigungsorgane (24) zum schwimmenden Positionieren des Ventilverschlusskörpers (22) und beidseits davon, in Richtung des Einlass- (18) und Auslassstutzens (20), angeordnete, ringförmige Ventilsitze (26,28) umfasst.

8. Schutzvorrichtung nach Anspruch 7, dadurch gekennzeichnet, dass im Bereich der Eintrittsöffnung des Einlassstutzens (18) des Explosions-Schutzventils (10), vorzugsweise in einer Prallplatte (46), eine coaxiale Hülse (54) mit gegenüber dem Einlassstutzen (18) kleinem Innendurchmesser (d) und einer wenigstens dem axialen Verschiebungsweg des Ventilverschlusskörpers (22) entsprechenden Länge gehaltert ist, und in dieser Hülse (54) ein über einen Stössel (58) mit dem Ventilverschlusskörper (22) verbundenen Kolben (56) gleitet, wobei der Stössel (58) vorzugsweise rohrförmig ausgebildet ist.

9. Schutzvorrichtung nach Anspruch 7 oder 8, dadurch gekennzeichnet, dass die Eintrittsöffnung des Einlassstutzens (18) des Explosions-Schutzventils (10) teilweise mit einer Platte (67) verschlossen ist, welche eine coaxiale Bohrung für ein sich bis zum Ventilverschlusskörper (22) erstreckendes Steuerrohr (76) geringen Innendruchmessers (d) und wenigstens eine periphere Oeffnung in einem äusseren Ringspalt (72) hat, wobei dieser äussere Ringspalt durch ein Innenrohr (66) begrenzt ist, welches den Hauptstrom der Explosionsdruckwellen siphonartig umleitet, und der Ventilverschlusskörper (22) ein über das Steuerrohr (76) gestülptes Führungsrohr (78) hat.

10. Schutzvorrichtung nach Anspruch 8 oder 9, dadurch gekennzeichnet, dass der Innendurchmesser (d) der Hülse (54) oder des Steuerrohrs (76) im Explosions-Schutzventil (10) zwischen dem 0,1- und 0,3-fachen Wert, vorzugsweise zwischen dem 0,15- und 0,25-fachen Wert, des Innendurchmessers (D) des Einlassstutzens (18) liegt.

11. Verwendung der Schutzvorrichtung nach einem der Ansprüche 1 bis 10 in Schutzräumen für Personen und/oder Anlagen, Containments in Kernkraftwerken und anderen Offshore-Anlagen.

## Claims

1. Protective device with mechanically fixed anchored means to reduce the air blast of pressure waves in ventilation systems of closed rooms (14),
characterised in that
the means projecting into a closed room (14) and arranged downstream of the ventilation system in relation to the pressure direction (X) are formed as air-permeable basket-like chicanes (40, 44).

2. Protective device according to claim 1, characterised in that the downstream basket-like chicanes (40, 44), preferably flanged in place, have a free cross section up to maximum approximately 50%.

3. Protective device according to claim 1 or claim 2, characterised in that the basket-like chicanes (40, 44) consist of at least single layer perforated sheet metal, slotted sheet metal or a fine-mesh wire netting, preferably formed in the shape of a cylinder, a truncated cone, a sphere or a hemisphere.

4. Protective device according to claim 3, characterised in that the part of the basket-like chicane (44) lying opposite the outlet opening is designed to be air-tight.

5. Protective device according to any of claims 1 to 4, characterised in that a prefilter (60) is arranged over the basket-like chicanes (40,44) to reduce the compressed air blast.

6. Protective device according to any of claims 1 to 5, characterised in that a baffle plate (46) covering the inlet opening of the ventilation device has four side inlet openings (52).

7. Protective device according to any of claims 1 to 6 to reduce the residual air blast of pressure waves with an explosion-protection valve (10), characterised in that this comprises, in addition to the mechanically fixed basket-like means (40, 44) for reducing the residual air blast, arranged upstream in relation to the explosion direction (X), a valve housing (16) with an inlet (18) and an outlet connector (20), a dimensionally stable mobile valve closing body (22) with peripheral annular sealing surfaces (22a, 22b), fixing elements (24) for the floating positioning of the valve closing body (22) and annular valve seats (26, 28) on both sides thereof, arranged in the direction of the inlet (18) and outlet connectors (20).

8. Protective device according to claim 7, characterised in that in the area of the inlet opening of the inlet connector (18) of the explosion-protection valve (10), preferably in a baffle plate (46), is mounted a coaxial sleeve (54) with a small internal diameter (d) in relation to the inlet connector (18) and a length corresponding at least to the axial displacement path of the valve sealing body (22), and in this sleeve (54) is guided a piston (56) connected to the valve sealing body (22) via a push rod (58), where the push rod (58) is preferably tubular.

9. Protective device according to claim 7 or 8, characterised in that the inlet opening of the inlet connector (18) of the explosion-protection valve (10) is partly closed by a plate (67) which has a coaxial bore for a control tube (76) of smaller internal diameter (d) extending as far as the valve closing body (22) and at least one peripheral opening in an outer annular gap (72), where this outer annular gap is limited by an inner tube (66) which diverts the main flow of the explosion pressure wave in a siphon-like manner, and the valve closing body (22) has a guide tube (78) pushed over the control tube (76).

10. Protective device according to claim 8 or 9, characterised in that the internal diameter (d) of the sleeve (54) or the control pipe (76) in the explosion protection valve (10) is between 0.1 and 0.3 times, preferably between 0.15 and 0.25 times the inner diameter (D) of the inlet connector (18).

11. Use of the protective device according to any of claims 1 to 10 in protected rooms for persons and/or equipment, containments in nuclear power stations and other, offshore, plants.

## Revendications

1. Dispositif de protection comportant des moyens montés de manière fixe d'un point de vue mécanique pour réduire le souffle d'ondes de choc dans des dispositifs d'aération d'espaces (14) fermés,
caractérisé en ce que
les moyens qui sont disposés en aval par rapport à la direction de pression (X) du dispositif d'aération et font saillie dans un espace (14) fermé sont réalisés sous forme de chicanes (40, 44) en forme de panier perméables à l'air.

2. Dispositif de protection selon la revendication 1, caractérisé en ce que les chicanes (40, 44) en forme de panier montées en aval et de préférence raccordées par brides possèdent une section transversale libre d'environ 50% au plus.

3. Dispositif de protection selon la revendication 1 ou 2, caractérisé en ce que les chicanes (40, 44) en forme de panier sont constituées de tôle perforées à au moins une couche, de tôles fendues ou de treillis métalliques à mailles fines qui sont réalisé(e)s de préférence sous la forme d'un cylindre, d'un tronc de cône, d'une sphère ou d'une hémisphère.

4. Dispositif de protection selon la revendication 3, caractérisé en ce que la partie des chicanes (44) en forme de panier située en vis-à-vis de l'orifice de sortie est étanche à l'air.

5. Dispositif de protection selon l'une des revendications 1 à 4, caractérisé en ce qu'un préfiltre (60) est disposé sur les chicanes (40, 44) en forme de panier pour supprimer le souffle.

6. Dispositif de protection selon l'une des revendications 1 à 5, caractérisé en ce qu'une plaque de chicane (46) recouvrant l'orifice d'entrée du dispositif d'aération présente quatre orifices d'entrée (52) latéraux.

7. Dispositif de protection selon l'une des revendications 1 à 6 pour réduire le souffle résiduel d'ondes de choc avec une soupape (10) de protection contre les explosions, caractérisé en ce que ladite soupape est prévue en amont par rapport à la direction d'explosion (X) en plus des moyens (40, 44) en forme de panier fixes d'un point de vue mécanique pour supprimer le souffle résiduel et comporte un boîtier (16) avec une tubulure d'entrée (18) et une tubulure de sortie (20), un obturateur (22) mobile et indéformable pourvu de surfaces d'étanchéité (22a, 22b) annulaires périphériques, des organes de fixation (24) pour un positionnement flottant de l'obturateur (22) de soupape et des deux côtés desdits organes de fixation, des sièges (26, 28) de soupape annulaires disposés dans la direction de la tubulure d'entrée (18) et de la tubulure de sortie (20).

8. Dispositif de protection selon la revendication 7, caractérisé en ce qu'un manchon (54) coaxial d'un diamètre intérieur (d) petit par rapport à la tubulure d'entrée (18) et d'une longueur correspondant au moins à la course de déplacement axiale de l'obturateur (22) de soupape est fixé dans la zone de l'orifice d'entrée de la tubulure d'entrée (18) de la soupape (10) de protection contre les explosions, de préférence dans une plaque de chicane (46) et qu'un piston (56) relié à l'obturateur (22) de soupape par l'intermédiaire d'une tige-poussoir (58) glisse dans ce manchon (54), la tige-poussoir (58) étant de préférence tubulaire.

9. Dispositif de protection selon la revendication 7 ou 8, caractérisé en ce que l'orifice d'entrée de la tubulure d'entrée (18) de la soupape (10) de protection contre les explosions est fermé partiellement par une plaque (67) qui possède un perçage coaxial pour un tube de commande (76) de faible diamètre intérieur (d) s'étendant jusqu'à l'obturateur (22) de soupape et au moins une ouverture périphérique dans un passage annulaire (72) extérieur, ce passage annulaire extérieur étant limité par un tube intérieur (66) qui dévie à la manière d'un siphon le courant principal des ondes explosives, et l'obturateur (22) de soupape possède un tube de guidage (78) enfoncé sur le tube de commande (76).

10. Dispositif de protection selon la revendication 8 ou 9, caractérisé en ce que le diamètre intérieur (d) du manchon (54) ou du tube de commande (76) dans la soupape (10) de protection contre les explosions représente entre 0,1 et 0,3 fois, de préférence entre 0,15 et 0,25 fois, le diamètre intérieur (D) de la tubulure d'entrée (18).

11. Utilisation du dispositif de protection selon l'une des revendications 1 à 10 dans des abris pour personnes et/ou des installations, des enceintes de confinement dans des centrales nucléaires et d'autres installations en mer.
